# EUROPEAN PATENT APPLICATION

(11) **EP 2 179 636 A1**
(43) Date of publication of application: **28.04.2010**
(21) Application number: 08465009.2
(22) Date of filing: 27.10.2008
(51) Int. Cl.: A01B 61/04

(54) **Stabilizing and overload protecting system, especially for multi-share plough**

(71) Applicant: P.P.U.H. Akpil Kazimierz Aniol, 39-231 Pilzno (PL)
(72) Inventor: Synowiecki, Marek, PL 39-231, Siedliska-Bogusz (PL)
(74) Representative: Klar, Miroslaw

(57) **Abstract**

The subject of invention is the stabilizing and overload protecting system, especially of multi-share rotary plough, used for protection of plough frame during work.

System is **characterized in that** the longitudinal brackets (3, 3') of plough frame (4, 4'), rotary mounted in the frame (1) by pivots (2, 2'), ended with bracket plates (5, 5'), are connected one to each other by two oblique stabilizing strips (6, 6'), equipped with guiding grooves (7, 7'), whereas between the ends (10, 10') of bracket plates (5, 5') servo motor (11) is located.

## Description

The subject of invention is the stabilizing and overload protecting system, especially of multi-share rotary plough, used for protection of plough frame during work.

From the description of American patent US 5 191 941 and polish description of patent No 166825 known is single or multi-share plough, **characterized in that** plough beam is rotary mounted on the plough frame at its forward end and a little behind the bolt there is a shear pin, limiting the rotation. Plough beam is connected to the lever, which from the connection point with the beam, is separated by longitudinal, limiting set screw and rests on the adjoining part of the beam. The lever at some distance from the bolt and from part resting on the beam is connected to the resilient damper. Moreover the damper is connected to plough frame or to the element connected to frame, which beneficially constitutes further lever assigned to the next plough beam, having its own plough frame. The frame consists then of few frames of reversible plough.

There is known from European patent description No EP 1 856 965 ... reversible plough with protecting device, consisting at least of one T-shaped plough beam with body stems and plough frames, whereby T-shaped beam is rotary connected by pivot to the plough frame and oblique brackets, energy accumulator keeping fixed work position are **characterized in that** the accumulator is located at the end of T-shaped beam and the beam is connected to the frame by vertical pivot and oblique brackets beneath and above transverse axis, connected with common ends to guiding element, formed in energy accumulator.

From the other European patent description No EP 0498176 known is a soil cultivating device in the form of 180° reversible plough, containing an overload protection, where each of the pair wisely mounted longitudinal plough bodies, is connected to plough beams by rotation point and the second one at some distance, whereas both ends of plough beams have pairs of resistance elements fixed to beams, each of which is connected by elastic, strengthening element , located between them, is **characterized in that** the strengthening element is designed as the rotary element, which is rolling on the appropriate protecting device and is constructed to be in turn supported by resistance element.

Stabilizing and overload-protecting system, especially of reversible multi-share plough frame, according to the invention containing the dumper, located between ends of lever of plough beam, **characterized in that** the rotary mounted with pivots longitudinal brackets of plough beams, ended with bracket plates, are connected with two oblique, stabilizing strips equipped with guiding grooves. One end of stabilizing strip is rotary connected with the first bracket plate, whereas on the other side the first stabilizing strip is connected with the second bracket plate by the sliding bolt, located in the guiding groove of the first stabilizing strip. Whereas one end of the second stabilizing strip is rotary connected with the second bracket plate, and on the other side the second stabilizing strip is connected to the first bracket plate by the bolt, located in the guiding groove of second stabilizing strip, whereas between ends of bracket plates the dumper is located, beneficially hydraulic.
Beneficially, angle arms of longitudinal plough frames are connected with bracket plates with screws.

Stabilizing and overload-protecting system, according to the invention, thanks to introduction of oblique located stabilizing strips, containing guiding grooves, allows for flexible action of plough frame during work, reducing danger of damage. Simple design allows for rapid assembly and de-assembly.

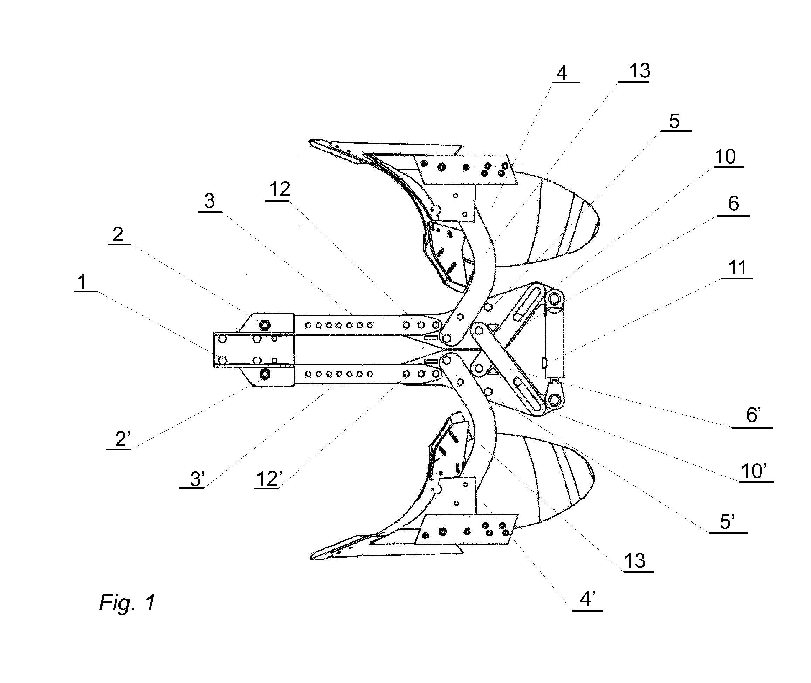

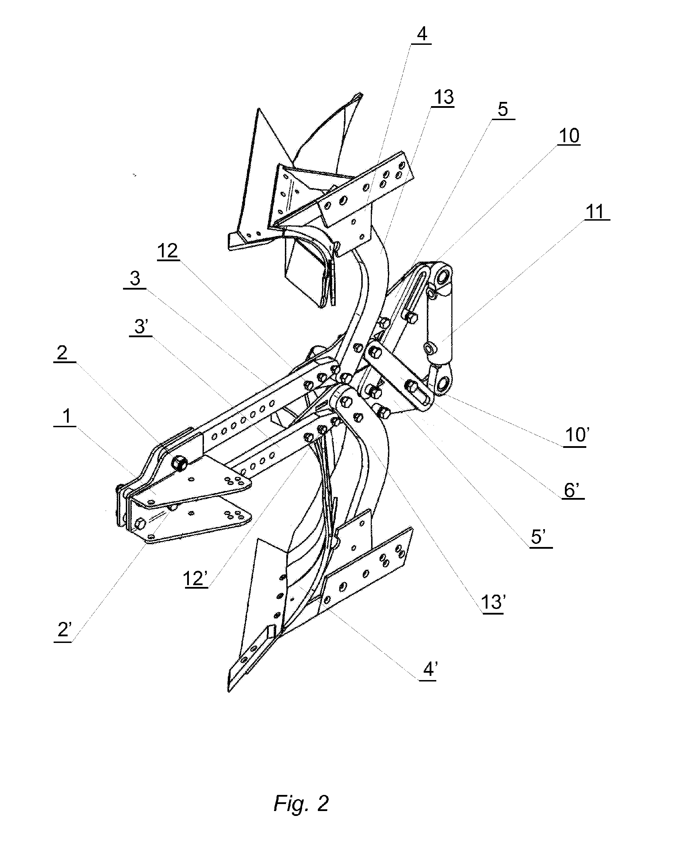

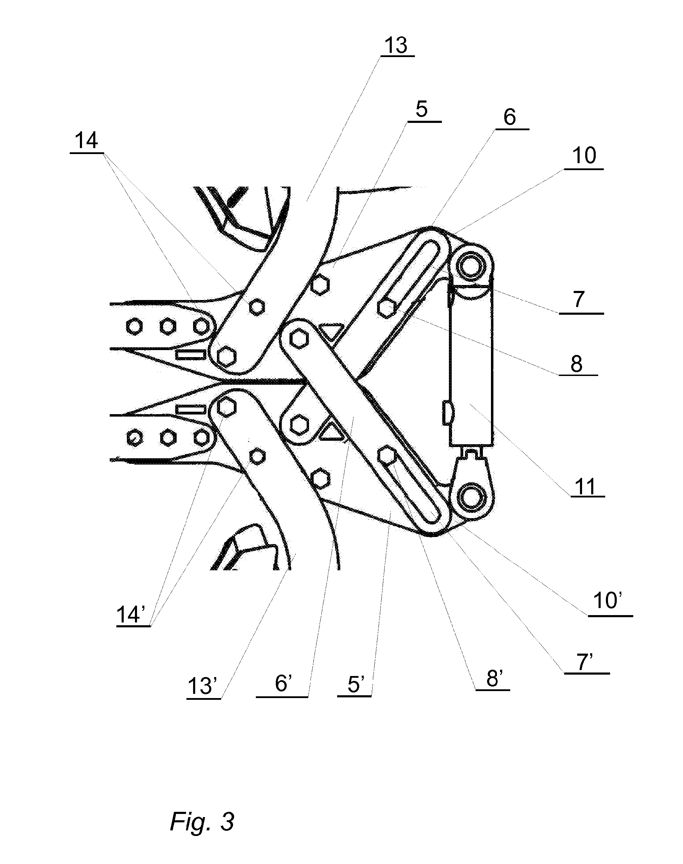

Subject of invention is shown in example o on the drawing, where fig. 2 is presenting view of the frame from above, fig. 2 - perspective view of frame, fig. 3 - detail of frame containing stabilizing strips.

Longitudinal brackets 3, 3' of plough frames 4, 4', rotary fixed in frame 1 on pivots 2, 2', ended with bracket plates 5, 5' are connected one to the other by oblique, stabilizing strips 6, 6', equipped with guiding grooves 7, 7'. One end of the first stabilizing strip 6 is rotary connected to with the first bracket plate 5, whereas on the other side the first stabilizing strip 6 is connected with the second bracket plate 5' by the pivot 8 sliding in the guiding groove 7 of the first stabilizing strip 6 , and the one end of the second stabilizing strip 6' is rotary connected with the with the second bracket plate 5', whereas on the other side the second stabilizing strip 6' is connected with the first bracket plate 5 by pivot 9 located in the guiding groove 7' of the second stabilizing strip 6', and between ends 10, 10' of bracket plates 5, 5' dumper 11 is located, beneficially hydraulic. Longitudinal brackets 3, 3' are fixed to bracket plates 5, 5' by screws 12, 12'. Angle arms 13, 13' of plough frames 4, 4' are fixed to bracket plates 5, 5' by screws 14, 14'.

## Claims

1. Stabilizing and overload-protecting system, especially of multi-share rotary plough, containing the dumper, located between the ends of beam lever, **characterized in that** longitudinal brackets (3, 3') of beams (4, 4'), rotary fixed in the frame (1) by pivots (2, 2') and ended by bracket plates (5, 5'), are fixed one to each other by two oblique stabilizing strips (6, 6'), equipped with guiding grooves (7, 7'), whereas one end of stabilizing strip (6) is rotary connected with the first bracket plate (5), and on the other end the first stabilizing strip is connected to the second bracket plate (5') by pivot (8) sliding in guiding groove (7) of the first stabilizing strip (6), whereas the one end of the second stabilizing strip (6') is rotary connected with the second bracket plate (5'), and on the other end the second stabilizing strip (6') is connected with the first bracket plate (5) by the pivot (9) located in the guiding groove (7') of the second stabilizing strip (6'), whereas between the ends (10), (10') of bracket plates (5), (5') the dumper (11) is located.

2. Stabilizing and overload-protecting system, according to claim 1, **characterized in that** the dumper (11) is a servo motor, beneficially hydraulic.

3. Stabilizing and overload-protecting system, according to laim. 1, **characterized in that** longitudinal brackets (3), (3') are fixed to bracket plates (5), (5') by screws (12), (12').

4. Stabilizing and overload-protecting system, according to claim. 1, **characterized in that** angle arms (13, 13') of plough frames (4, 4') are fixed to bracket plates (5, 5') by screws (14, 14').
